# EUROPEAN PATENT APPLICATION

(11) **EP 4 470 371 A1**
(43) Date of publication of application: **04.12.2024**
(21) Application number: 23745784.1
(22) Date of filing: 18.01.2023
(51) Int. Cl.: A01K 61/00, A01K 61/10, A01K 61/60, A01K 63/00, A01K 63/04

(54) **APPARATUS FOR GENERATING A BUBBLE CURTAIN FOR OPEN BODIES OF WATER HAVING AN IRREGULAR BED**

(30) Priority: 26.01.2022 CL 2022211
(71) Applicant: PSP Chile SpA, Puerto Varas (CL)
(72) Inventor: LÓPEZ AEDO, Ricardo Bruno, Puerto Varas (CL)
(74) Representative: Lippert Stachow Patentanwälte Rechtsanwälte Partnerschaft mbB
(86) International application number: PCT/CL2023/050006
(87) International publication number: WO 2023/141731

(57) **Abstract**

Apparatus for generating a uniform bubble curtain in open bodies of water with an irregular bottom, comprising a compressor and an air or gas distributor-controller device, main and secondary feed ducts and a series and staggered arrangement of diffuser duct segments connected to the secondary feed ducts.

Bubble curtain generating apparatus for open water bodies of irregular bottom, generating a uniform bubble curtain and comprising: an air or gas compressor, a main feed duct for compressed air or gas connected to the compressor outlet; a distributor-controller device for compressed air or gas connected to the main feed duct, multiple secondary feed ducts connected to the distributor-controller device for compressed air or gas and a series and staggered arrangement of multiple straight and horizontal segments of diffuser duct, fixed at a certain depth above the bottom of the open water body by supports. The diffuser duct segments are independently connected to corresponding secondary feed ducts and have micro-perforations for the release of ascending bubbles of compressed air or gas in the open water body. The compressed air or gas distributor-controller device comprises means for regulating the pressure and flow rate of air or gas of each diffuser duct segment according to the depth at which it is located and its distance relative to the compressed air or gas distributor-controller device.

## Description

### Scope or field of invention

The present invention relates to the introduction of gases, vapours or air into liquid bodies and more specifically to the introduction of gases, vapours or air by bubbling into liquid bodies and even more specifically to the introduction of gases, vapours or air by bubbling into open bodies of water to produce a curtain of bubbles and generate a barrier or blockade to the passage of objects floating on the surface or in mid-water, micro-organisms, certain aquatic species and liquids not miscible in water, among other unwanted or harmful elements for a process or protected area.

### Background of the prior art

Apparatuses are known that introduce gases, vapours or air into liquids, in particular water, in order to generate a curtain of bubbles for different purposes, typically the protection of productive processes, such as the protection of crops of unwanted aquatic species such as harmful algae and jellyfish and the protection of intakes against the introduction of fish and floating objects but also for the retention and diversion of pollutants in the water, the melting of ice to avoid damage to civil works and keep the waters free for navigation, among other uses.

Typically, these devices consist of a compressor that propels gases, vapours or compressed air through a pipe, conduit or hose, commonly referred to as a feed duct, to a horizontal bubbling tube, usually called a diffuser duct. This diffuser duct is sunk with ballast or anchored to the bottom of the body of water and comprises very small perforations spaced regularly and closely, allowing the compressed gas or air to escape in the form of bubbles. When these bubbles rise through the water and due to their upward thrust they cause the entrainment of the surrounding water creating a stream or uniform laminar flow of water parallel to the bubbles. These bubbles and rising water flow constitute the so-called "bubble curtain", which generates a barrier to the passage of suspended solids, micro-organisms and immiscible liquids almost as high as the depth at which the duct is located and also serves as a deterrent and repellent of unwanted aquatic species.

However, bubble curtain generating apparatuses that are regularly used are constituted by one or more continuous diffuser ducts in a body of water with a flat or relatively flat bottom and, therefore, placed at a uniform depth. Because in some cases bubble curtain protection must be carried out in bodies of water with markedly irregular or uneven bottoms, the pressure in different sections along the continuous diffuser duct varies due to the differences in depth. This results in a non-uniform bubble curtain which does not effectively fulfil its intended function.

### Summary of the invention

Accordingly, it is an objective of the present invention to provide a bubble curtain generating apparatus that can be installed in open bodies of water with an irregular bottom, in which the bubble curtain is uniform throughout its extension without losing its effectiveness.

In order to achieve the aforementioned objectives, the solution has been adopted that the bubble curtain generating apparatus is capable of compensating for the pressure differences in the diffuser duct and generating a uniform bubble curtain with a series and staggered arrangement of multiple diffuser duct segments independently fed with gas or air at a pressure and flow rate defined by the depth at which the segment or "step" is located.

In accordance with the foregoing solution, a bubble curtain generating apparatus for open bodies of water with irregular bottoms has been developed. This apparatus first comprises an air or gas compressor with a compressed gas outlet installed outside the open body of water and connected to one end of a main compressed air or gas feed duct, which in turn is connected at its opposite end to a distributor-controller device of the compressed air or gas. The materiality and dimension characteristics of the main feed duct will depend on the location and design of the bubble curtain relative to the position where the compressor can be installed.

The compressed air or gas distributor-controller device includes a manifold provided with multiple outlets and means for regulating the pressure and flow rate of the compressed gas or air within the diffuser duct segments. The latter comprise at least one rotameter, a pressure gauge and flow and pressure control valves for each secondary feed duct and, therefore, arranged at the outlets of the manifold.

Additionally, the bubble curtain generating apparatus comprises a series of secondary feed ducts each connected at one end to an outlet of the manifold and having the opposite end submerged in the body of water.

A feature of the invention is that the bubble curtain generating apparatus possesses an array of multiple straight and horizontal segments of diffuser duct, which are arranged in series and staggered at the bottom of the open water body. Each of the diffuser duct segments is independently connected to the opposite end of a corresponding secondary feed duct. To generate the bubble curtain the diffuser duct segments have micro-perforations for the release of ascending air or gas bubbles. Both the secondary feed ducts and the diffuser duct segments are preferably flexible for easier installation in the body of water.

Supports anchored to the bottom of the body of water, which can be rigid, flexible or semi-flexible, allow to fix at the bottom of the open body of water and shape the arrangement of multiple segments of diffuser duct that generate the bubble curtain. The supports are appropriately selected in type, quantity and height relative to the bottom of the body of water, taking into account the length of each segment of diffuser duct and the unevenness of the bottom of the body of water under it.

In addition, another feature of the invention is that the length of each diffuser duct segment and the depth to which they are located at the bottom of the open body of water are a function of the shape of the arrangement of multiple diffuser duct segments and the bathymetric data of the bottom of the open body of water. Said shape of the arrangement of multiple segments of diffuser duct on the bottom of the open body of water is determined by the basal area of the water column, or the lower edge of the vertical water wall, to be covered with the curtain of bubbles, depending on whether it is sought to surround an object or only create a vertical barrier in the open water body..

In turn, the pressure and flow rate of the compressed air or gas in each diffuser duct segment are regulated by the compressed air or gas distributor-controller device based on the depth at which the diffuser duct segment in question is located in the body of water and its relative distance from the compressed air or gas distributor-controller device. Consequently, each diffuser duct segment is independently fed with compressed air or gas via the secondary feed ducts. The secondary feed ducts deliver gas or compressed air at different pressures and equal normal flow rates to the diffuser duct segments simultaneously when they are at different depths. In the event that one or more segments of the diffuser duct are at the same depth, a secondary feed duct can be branched to feed them simultaneously with the same pressure and flow of gas or air. All this allows to produce a uniform bubble curtain throughout the entire arrangement of multiple diffuser duct segments, regardless of the depth at which the air or pressurized gas diffuser duct segments are located.

It is obvious that the bubble generating apparatus also comprises a series of auxiliary elements which allows for its structuring and operation. These elements include connectors for the entry of compressed air or gas into the main feed duct and the secondary feed ducts, as well as outlets for the air or gas. Additionally, the apparatus includes devices to remove the water that occasionally enters the diffuser duct segments and devices to prevent the flooding of the feed ducts, among others.

### Brief description of the drawings

To facilitate the understanding of the foregoing ideas, the object of the invention is described below, with reference to the accompanying illustrative drawings. In the drawings:
Figure 1 represents a diagram of the bubble curtain generating apparatus according to the invention, with its different components, in which by way of example the apparatus comprises four diffuser duct segments and respective secondary feed ducts.
Figure 2 represents a plan view of an example of the way in which the arrangement of multiple diffuser duct segments that is part of the bubble curtain generating apparatus according to the invention can be arranged, specifically one with four diffuser duct segments like that of Figure 1.
Figure 3 depicts an elevation view of an example of development of the layout of multiple diffuser duct segments of Figure 2, showing the serial and staggered arrangement of the diffuser duct segments and their anchoring to the irregular bottom of the body of water open using supports.
Figure 4 depicts a bottom perspective view of the bubble curtain that is formed with the array of multiple diffuser duct segments of Figures 1 to 3.

### Detailed description of the invention

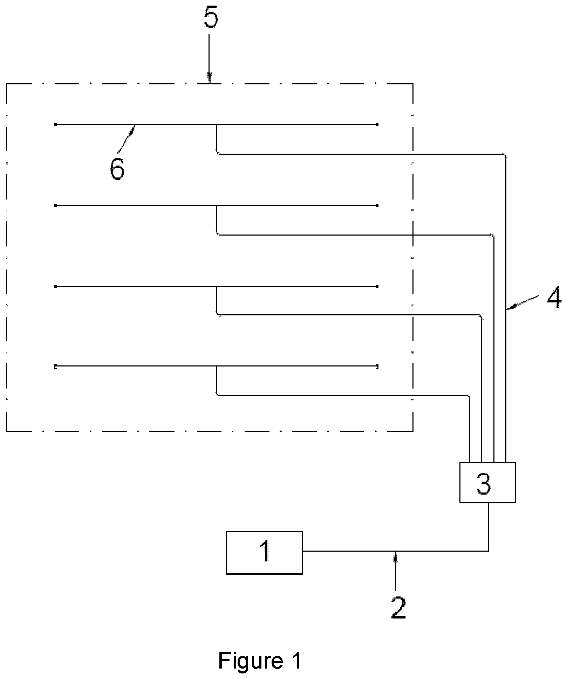

As shown in Figure 1, the bubble curtain generating apparatus object of the invention comprises a compressor (1) arranged outside the surface of the water, usually on dry land or on a floating platform, according to the scope of application of the bubble curtain. The outlet of the compressor is connected to a feed duct (2) that leads to the compressed air or gas distributor-controller device (3). From said device (3) multiple secondary feed ducts (4) emerge, as many as the outlets on the multiple tube (not shown) that is part of the compressed air or gas distributor-controller device (3). The device is designed according to the number of secondary feed ducts to be supplied with compressed gas or air. The figure illustrates, by way of example, four secondary feed ducts (4) connected to an arrangement of multiple diffuser duct segments (5) comprising four corresponding diffuser duct segments (6) with micro-perforations for releasing ascending air or gas bubbles to generate the bubble curtain.

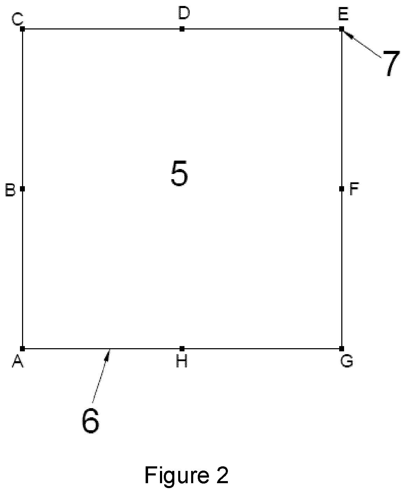

Figure 2 shows an example of the arrangement of the four diffuser duct segments (5) of Figure 1, forming a square at the bottom of an open body of water and thus protecting the square-based water column that said diffuser duct arrangement encloses. Each side of the square is composed of one of the four straight and horizontal segments of diffuser duct (6), which are attached to the bottom of the body of water by means of supports (7) at different points (A, B, C, D...H) on the bottom of the open body of water. For better understanding, the secondary feed ducts connected to the diffuser duct segments as well as the other components of the bubble curtain generating apparatus have been omitted in the figure.

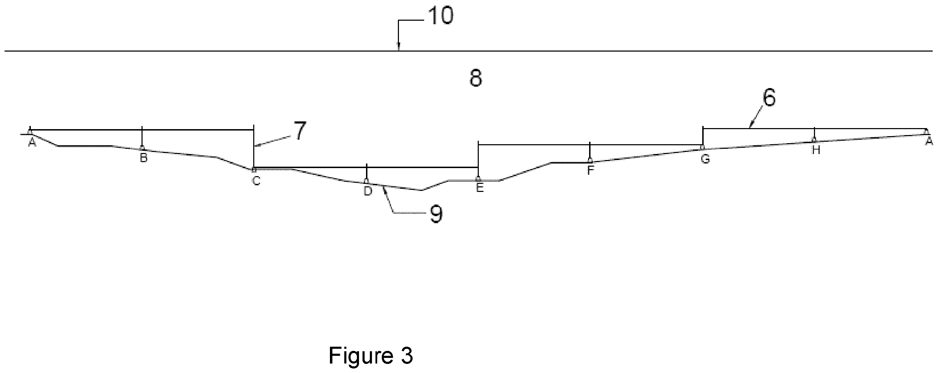

As another example, Figure 3 shows the arrangement of Figure 2 deployed in a plane where each side of the square and, therefore, each diffuser duct segment (6) covers an irregular area of the bottom (9) of the open body of water (8) and the diffuser duct segments are arranged in series and in a staggered manner at certain depths of the surface (10) of the open body of water (8). The diffuser duct segments (6) are also attached to the irregular bottom (9) of the open water body (8) by means of supports (7) anchored to the bottom (9) and selected in an amount and height appropriate to the length of each diffuser duct segment and the unevenness of the bottom (9) under it.

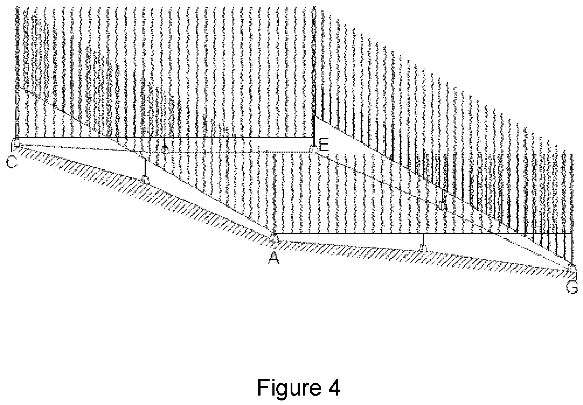

Figure 4 shows the bubble curtain generated by the example apparatus of Figs. 1 to 3, which covers a column of water that reaches the surface of the open body of water.

It is worth mentioning that the diffuser duct arrangement could have, in its plan view, another polygonal shape other than the square to protect the periphery of an installation or floating object with the bubble curtain or the diffuser duct arrangement could extend in a linear shape for those applications such as those already described initially in this document, where it is required to generate a vertical barrier in the open body of water.

## Claims

1. Bubble curtain generating apparatus for open bodies of water with an irregular bottom, **CHARACTERISED in that** it comprises:
- an air or gas compressor;
- a main feed duct of compressed air or gas connected at one end thereof to the outlet of the compressor;
- a compressed air or gas distributor-controller device connected to the opposite end of the main feed duct;
- multiple secondary feed ducts connected at one end thereof to the compressed air or gas distributor-controller device; and
- a series and staggered arrangement of multiple straight and horizontal diffuser duct segments fixed at a certain depth on the bottom of the open water body by supports, the diffuser duct segments being independently connected to a corresponding one of the multiple secondary feed ducts at the opposite end of these and having micro-perforations for the release of ascending bubbles of the compressed air or gas in the open water body,
wherein the compressed air or gas distributor-controller device comprises means for regulating the pressure and the flow rate of air or gas of each diffuser duct segment according to the depth at which it is located and its distance relative to the compressed air or gas distributor-controller device so as to generate a uniform bubble curtain throughout the diffuser duct arrangement, regardless of the depth at which the diffuser duct segments are located.

2. Bubble curtain generating apparatus according to claim 1, **CHARACTERISED in that** the staggered arrangement of multiple diffuser duct segments has a shape that is determined by the base area of a water column, or the lower edge of a vertical water wall, to be covered with the bubble curtain, according to whether it is sought to surround an object or create a vertical barrier in the open water body.

3. Bubble curtain generating apparatus according to claim 2, **CHARACTERISED in that** the diffuser duct segments have a length and are located at a depth in the open body of water that is a function of the shape of the arrangement of multiple diffuser duct segments and the bathymetry of the bottom of the open body of water.

4. Bubble curtain generating apparatus according to claim 1, **CHARACTERISED in that** the compressed air or gas distributor-controller device comprises a multiple tube with an inlet connected to the opposite end of the main feed duct and multiple outlets connected to each of the secondary feed ducts.

5. Bubble curtain generating apparatus according to claim 1, **CHARACTERISED in that** the means for regulating the pressure and the flow rate of air or gas in each diffuser duct segment comprise at least one rotameter, a pressure gauge and flow and pressure control valves for each secondary feed duct.

6. Bubble curtain generating apparatus according to claim 1, **CHARACTERISED in that** the supports of the diffuser duct segments are anchored to the bottom of the open body of water and are selected in an amount and height appropriate for the length of each diffuser duct segment and the slope that the bottom of the body of water has under it.

7. Bubble curtain generating apparatus according to claim 1, **CHARACTERISED in that** when the diffuser duct segments are at different depths they are simultaneously fed with compressed gas or air at different pressures and equal normal flow rates by the secondary feed ducts.
